# EUROPÄISCHE PATENTSCHRIFT

(11) **EP 0 645 011 B1**
(45) Veröffentlichungstag und Bekanntmachung des Hinweises auf die Patenterteilung: **16.06.1999**
(21) Anmeldenummer: 94910338.6
(22) Anmeldetag: 17.03.1994
(51) Int. Cl.: G01N 27/419

(54) **SENSORANORDNUNG ZUR BESTIMMUNG VON GASKOMPONENTEN UND/ODER GASKONZENTRATIONEN VON GASGEMISCHEN**
SENSOR FOR IDENTIFYING GASES AND/OR DETERMINING THE CONCENTRATION OF GASES IN MIXTURES
DETECTEUR POUR DETERMINER LES COMPOSANTS GAZEUX ET/OU LES CONCENTRATIONS GAZEUSES DE MELANGES GAZEUX

(30) Priorität: 10.04.1993 DE 4311851
(43) Veröffentlichungstag der Anmeldung: 29.03.1995
(73) Patentinhaber: ROBERT BOSCH GMBH, 70442 Stuttgart (DE)
(72) Erfinder: FRIESE, Karl-Hermann, D-71229 Leonberg (DE); DIETZ, Hermann, D-70839 Gerlingen (DE); GRUENWALD, Werner, D-70839 Gerlingen (DE); HOETZEL, Gerhard, D-70376 Stuttgart (DE); NEUMANN, Harald, D-71665 Vaihingen/Enzweihingen (DE); RIEGEL, Johann, D-74321 Bietigheim-Bissingen (DE); SCHUMANN, Bernd, D-71277 Rutesheim (DE)
(86) Internationale Anmeldenummer: DE9400289
(87) Internationale Veröffentlichungsnummer: WO9424550

(56) Entgegenhaltungen:
- EP-A- 0 259 175
- EP-A- 0 517 364
- DE-A- 3 707 874
- DE-C- 3 728 618
- US-A- 4 927 517
- SENSORS AND ACTUATORS B, Bd.9, 1992, LAUSANNE CH Seiten 233 - 239 J.H. VISSER ET AL 'Sensors for measuring combustibles in the absence of oxygen' in der Anmeldung erwähnt

## Beschreibung

### Stand der Technik

Die Erfindung geht aus von einer Sensoranordnung zur Bestimmung von Gaskomponenten und/oder von Gaskonzentrationen in Gasgemischen nach der Gattung des Hauptanspruchs.

Aus Sensors und Actuators B, 9 (1992), 233 - 239, ist eine Sensoranordnung zur Bestimmung von CO-Konzentrationen bekannt, bei der eine Pumpzelle Sauerstoff zu einem Meßelement pumpt. Das Meßelement ist dabei in einen Meßraum ohne einen definierten Bezug zur Pumpzelle und zum Gasgemisch angeordnet. Es wird lediglich gefordert, daß am Meßelement eine ausreichende Sauerstoffkonzentration vorliegt. Es wurde dabei festgestellt, daß bei CO in Luft mit 21 % O₂ der Widerstandswert eines SnO₂₋Halbleitergassensors drei Größenordnungen größer ist als bei CO in N₂.

Aus der EP 0 517 364 A2 ist eine Sensoranordnung mit einem Schichtaufbau bekannt, in den eine Pumpzelle und ein Meßelement integriert sind. Zwischen der Pumpzelle und dem Meßelement ist eine poröse Schicht vorgesehen, die sowohl den von der Pumpzelle gepumpten Sauerstoff als auch das Meßgas dem Meßelement zuleitet. Dabei wird der von der Pumpzelle gepumpte Sauerstoff vor dem Meßelement mit dem Meßgas vermischt. Die Pumpzelle und das Meßelement liegen in unterschiedlichen Schichtebenen übereinander, so daß diese im wesentlichen in einer von einem Heizelement erzeugten gleichen Temperaturzone liegen.

Ein Gassensor mit einer elektrochemischen Pumpzelle und einer elektrochemichen Meßzelle, die in Schichtebenen übereinanderliegend angeordnet sind, geht aus der EP 0 259 175 A2 hervor. Da die Pumpzelle und die Meßzelle in Schichtebenen übereinanderliegen, befinden sich diese ebenfalls in der gleichen Temperaturzone.

### Vorteile der Erfindung

Die erfindungsgemäße Sensoranordnung mit den kennzeichnenden Merkmalen des Hauptanspruchs hat den Vorteil, daß eine gute galvanische Trennung und thermische Entkopplung des Meßelements gegenüber der Pumpzelle vorliegt. Dies ist deshalb von Bedeutung, weil zum Betreiben der Pumpzelle bedeutend höhere Temperaturen notwendig sind als das Meßelement benötigt. Ferner hat die Pumpzelle die Aufgabe, ausreichend Sauerstoff zum Meßelement zu pumpen. Es findet also keine Rückkopplung zwischen Pumpzelle und Meßelement statt. Insofern ist die galvanische Trennung von Pumpzelle und Meßelement wichtig. Das Verlegen des Meßelements in kältere Bereiche garantiert schließlich, daß das Meßgas einer möglichst geringen Vorkatalyse ausgesetzt ist. Der integrierte Aufbau der Sensoranordnung gewährleistet schließlich, daß zur Eliminierung der Sauerstoffquerempfindlichkeit ausreichend Sauerstoff am sensitiven Bereich des Meßelements anliegt. Der Aufbau der Sensoranordnung wird durch einen Laminatverbund von Keramikfolien erreicht, welcher mindestens eine ionenleitende Keramik für die Pumpzelle enthält und bei dem im lateralen Abstand zur Pumpzelle das Meßelement positoniert ist. Der Sauerstofftransport zwischen Pumpzelle und Meßelement erfolgt über eine im Laminatverbund integrierte Diffusionsstrecke, welche als offener Kanal oder als poröse Füllung ausgeführt sein kann.

Durch die in den Unteransprüchen aufgeführten Maßnahmen sind vorteilhafte Weiterbildungen und Verbesserungen der im Hauptanspruch angegebenen Sensoranordnung möglich. Als besonders geeignetes Meßelement hat sich ein in Dickschichttechnik ausgeführter Widerstandssensor aus dotiertem SnO₂ herausgestellt. Weiterhin geeignet als Meßelement ist eine elektrochemische Meßzelle. Eine noch bessere thermische Entkopplung wird erreicht, wenn das Meßgas über eine seitliche Diffusionsstrecke dem sensitiven Bereich des Meßelements zugeführt wird und der unmittelbare Kontakt des Meßelements zum Meßgas mittels einer gasdichten Schicht unterbrochen ist. Diese Maßnahme ist deshalb zweckmäßig, damit das Meßgas nicht vorkatalysiert wird und der Sauerstoff nicht ungehindert über den sensitiven Bereich ins Meßgas diffundieren kann.

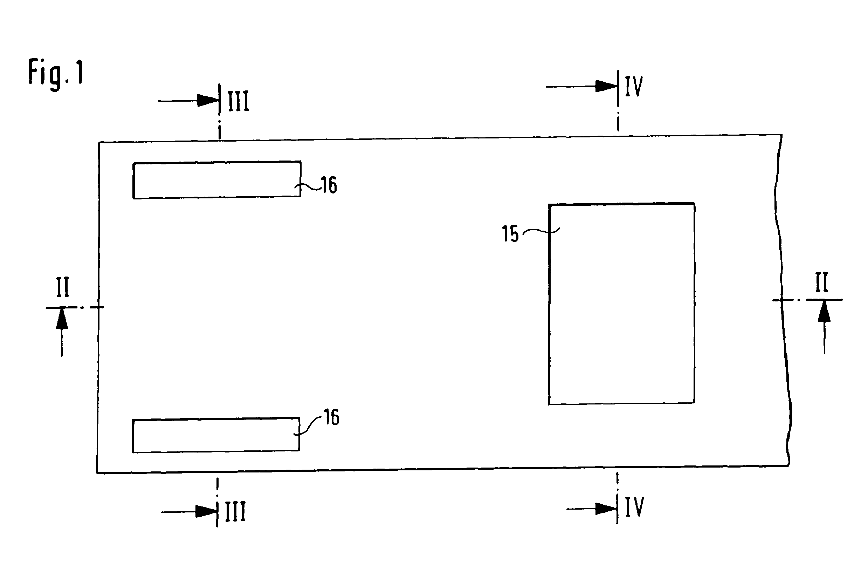

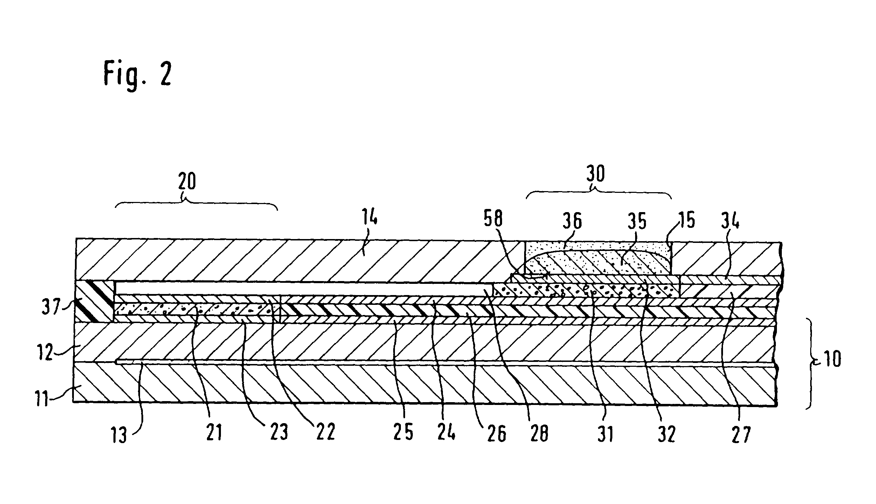

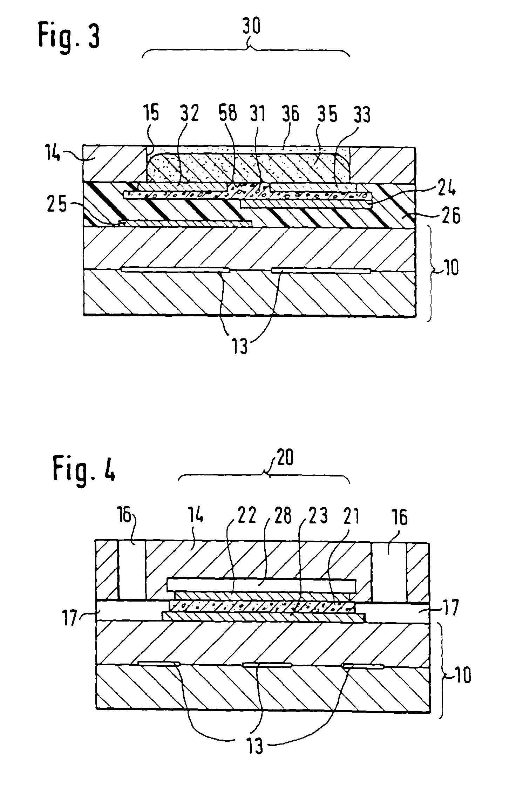

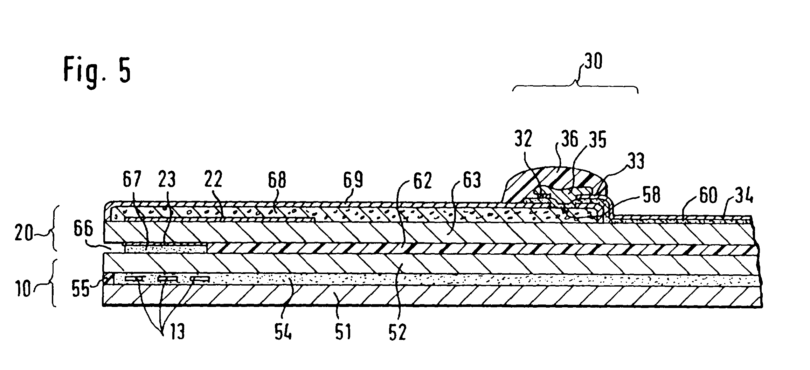

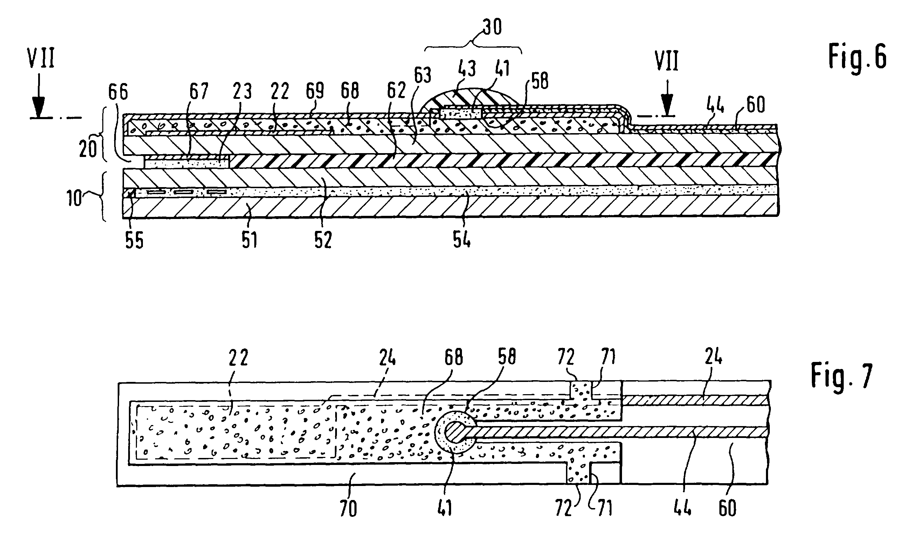

Drei Ausführungsbeispiele der Erfindung sind in der Zeichnung dargestellt und in der nachfolgenden Beschreibung näher erläutert. Es zeigen Figur 1 eine Draufsicht auf ein erstes Ausführungsbeispiel einer erfindungsgemäßen Sensoranordnung, Figur 2 einen Längsschnitt entsprechend der Linien II-II gemäß Figur 1, Figur 3 eine Schnittdarstellung entsprechend der Linie III-III in Figur 1, Figur 4 einen Querschnitt entsprechend der Linie IV-IV gemäß Figur 1, Figur 5 einen Längsschnitt durch eine erfindungsgemäße Sensoranordnung gemäß einem zweiten Ausführungsbeispiel, Figur 6 einen Längsschnitt durch eine erfindungsgemäße Sensoranordnung gemäß einem dritten Ausführungsbeispiel, und Figur 7 einen Schnitt in der Schichtebene entsprechend der Linie VII-VII gemäß Figur 6.

### Ausführungsbeispiele

Ein erstes Ausführungsbeispiel geht aus den Figuren 1 bis 4 hervor. Die Sensoranordnung hat eine Pumpzelle 20 und ein Meßelement 30. Ein Keramikträger 10 ist mit einer ersten Al₂O₃-Folie 11 und einer zweiten Al₂O₃-Folie 12 ausgeführt, zwischen welchen eine Widerstandsheizung 13 angeordnet ist. Wie aus den Figuren 3 und 4 hervorgeht, sind die Leiterbahnen des Widerstandsheizers 13 unter der Pumpzelle 20 und dem Meßelement 30 unterschiedlich dimensioniert. Dadurch werden sie in diesen Zonen unterschiedlich erwärmt. Zweckmäßig ist, wenn die Temperatur an der Pumpzelle 20 ca. 700° C und am Meßelement 30 ca. 500° C beträgt.

Auf der zweiten Al₂O₃-Folie 12 ist eine äußere Pumpelektrode 23 mit einer Leiterbahn 25 aufgebracht. Auf der äußeren Pumpelektrode 23 befindet sich eine poröse sauerstoffionenleitende Festelektrolytschicht 21 aus beispielsweise yttriumstabilisiertem ZrO₂. Über der Leiterbahn 25 liegt eine Isolationsschicht 26 aus beispielsweise Al₂O₃. Die Isolationsschicht 26 ist beispielsweise gleich stark wie die poröse Festelektrolytschicht 21 ausgebildet. Auf der porösen Festelektrolytschicht 21 befindet sich eine innere Pumpelektrode 22, welche mit einer über die Isolationsschicht 26 geführten weiteren Leiterbahn 24 verbunden ist.

Ferner ist eine Abdeckfolie 14 vorgesehen, die beispielsweise ebenfalls aus Al₂O₃ besteht. In der Abdeckfolie 14 befinden sich gemäß Figur 1 im lateralen Abstand zur Pumpzelle 20 eine Aussparung 15, in der das Meßelement 30, wie später beschrieben, eingesetzt ist. Ferner sind in der Abdeckfolie 14 zwei sich gegenüberliegende Öffnungen 16 eingebracht, die gemäß Figur 4 jeweils in einen rechtwinklig dazu verlaufenden Kanal 17 münden, welcher jeweils seitlich der Pumpzelle 20 zugeführt ist. Bei der vorliegenden Ausführung müssen die Kanäle 17 an die äußere Pumpelektrode 23 herangeführt werden, da die Festelektrolytschicht 21 der Pumpzelle 20 die Öffnung 16 und den Diffusionskanal 28 gasdicht trennt. Zwischen Keramikträger 10 und Abdeckschicht 14 ist die Sensoranordnung von einem gasdichten Rahmen 37 umgeben.

Unterhalb der Aussparung 15 befindet sich eine auf die Isolationsschicht 26 und teilweise auf die Elektrodenzuleitung 24 aufgebrachte poröse Isolationsschicht 31, beispielsweise Al₂O₃. Die Aussparung 15 bildet zur Isolationsschicht 31 hin zugleich eine Diffusionsöffnung 58 für den von der Pumpzelle 20 zugepumpten Sauerstoff. Auf der Isolationsschicht 31 sind zwei nebeneinander angeordnete Meßelektroden 32, 33 positioniert. An die Isolationsschicht 31 schließt sich entgegengesetzt zur Pumpzelle 20 eine weitere Isolationsschicht 27 an, auf der jeweils Leiterbahnen 34 für die Meßelektroden 32, 33 geführt sind. Über den beiden Meßelektroden 32, 33 ist eine halbleitende Metalloxidschicht 35, beispielsweise aus SnO₂ derart angeordnet, daß sie die Aussparung 15 bzw. die Diffusionsöffnung 58 zumindest flächenhaft ausfüllt. Über der Metalloxidschicht 35 befindet sich eine poröse Schutzschicht 36, beispielsweise aus Al₂O₃ oder Mg-Spinell (Figur 2 und 3).

Zwischen Deckfolie 14 einerseits und der Isolationsschicht 26, der inneren Pumpelektroden 21 und der Leiterbahn 24 andererseits befindet sich ein Diffusionskanal 28, welcher sich von der inneren Pumpelektrode 22 bis hin zur porösen Isolationsschicht 31 unterhalb des Meßelements 30 erstreckt. Über den Diffusionskanal 28 diffundiert der von der Pumpzelle 20 gepumpte Sauerstoff hin zum Meßelement 30. Es ist ebenso möglich, den Diffusionskanal 28 als poröse Diffusionsschicht auszuführen (Figur 1).

Ein zweites Ausführungsbeispiel zeigt Figur 5, bei dem der Keramikträger 10 aus zwei Festelektrolytfolien 51 und 52 gebildet ist, und bei dem zwischen den beiden Festelektrolytfolien 51, 52 der Widerstandsheizer 13 in eine poröse Heizerisolation 54 eingebettet ist. Zur Abdichtung ist die Heizerisolation 54 von einem gasdichten Rahmen 55 umgeben. Auf dem Keramikträger 10 ist eine isolierende Trennschicht 62, beispielsweise aus Al₂O₃ aufgebracht, wobei sie im Bereich der schmalen Stirnseite eine Fläche ausspart, die einen Diffusionsspalt 66 bildet. Im Diffusionsspalt 66 ist ein poröser Diffusionskörper 67, beispielsweise in Schichtform angeordnet.

Über der Trennschicht 62 liegt eine weitere Festelektrolytfolie 63, an welcher im Bereich des Diffusionskörpers 67 die Pumpzelle 20 ausgebildet ist. Dazu liegt über dem Diffusionskörper 67 die äußere Pumpelektrode 23, deren nicht dargestellte Leiterbahn zwischen der Trennschicht 62 und der Festelektrolytfolie 63 geführt ist. Der äußeren Pumpelektrode 23 gegenüberliegend ist auf der Großfläche der Festelektrolytfolie 63 die innere Pumpelektrode 22 angeordnet. Die innere Pumpelektrode 22 besitzt ebenfalls eine nicht dargestellte Leiterbahn, welche auf der Festelektrolytfolie 63 geführt wird.

Auf der Festelektrolytfolie 63 befindet sich eine poröse Diffusionsschicht 68, wobei die poröse Diffusionsschicht 68 über der inneren Pumpelektrode 22 bis hin zu dem im lateralen Abstand zur Pumpzelle 20 angeordneten Meßelement 30 geführt ist. Die poröse Diffusionsschicht 68 ist mit einer gasdichten Abdeckschicht 69 abgedeckt. An der Stelle des Meßelements 30 hat die Abdeckschicht 69 die Diffusionsöffnung 58.

Im vorliegenden Ausführungsbeispiel wird als Meßelement 30, wie beim ersten Ausführungsbeispiel, ein Halbleitergassensor verwendet. Dazu ist zur galvanischen Trennung über die Öffnung 58 eine poröse Isolationsschicht 60 gelegt, welche beispielsweise weiter über die Festelektrolytfolie 63 geführt ist. Auf der Isolationsschicht 60 sind die beiden Meßelektroden 32, 33 angeordnet, deren Elektrodenleiterbahnen 34 über die Isolationsschicht 60 weitergeführt sind. Über den Meßelektroden 32, 33 ist die halbleitende Metalloxidschicht 35 angeordnet. Schließlich befindet sich über der Metalloxidschicht 35 die poröse Schutzschicht 36.

Ein drittes Ausführungsbeispiel zeigt Figur 6 und 7. Hierbei ist die Sensoranordnung, was den Keramikträger 10 und die Pumpzelle 20 betrifft, in gleicher Weise aufgebaut wie die Sensoranordnung gemäß Figur 5. Im Unterschied zu dem Ausführungsbeispiel gemäß Figur 5 ist jedoch das Meßelement 30 eine elektrochemische Meßzelle, welche nach dem Nernst-Prinzip arbeitet. Dazu ist in die Diffusionsöffnung 58 eine Meßelektrode 41 eingesetzt, welche mit einer Meßelektrodenleiterbahn 44 verbunden ist. Die Meßelektrodenleiterbahn 44 ist über die Isolierschicht 60 geführt, wobei die Isolierschicht bis zur Meßelektrode 41 reicht.

Die Leiterbahn 24 der inneren Pumpelektrode 22 liegt gemäß Figur 7 ebenfalls auf der Isolationsschicht 60. Die Meßelektrode 41 ist mit einer gasdichten Abdeckung 43 versehen. Als gasdichte Abdeckung 43 eignet sich beispielsweise ein beim Sintern schmelzendes Glas.

Bei diesem Ausführungsbeispiel bildet die innere Pumpelektrode 22 zugleich die Referenzelektrode für die elektrochemische Meßzelle 30. Die Sauerstoffionenleitung zwischen der Meßelektrode 41 und der Referenzelektrode erfolgt hierbei über die poröse Diffusionsschicht 68, die aus sauerstoffionenleitendem Material, beispielsweise ZrO₂ besteht. Bei dieser Ausführungsform wird der zur Eliminierung der Sauerstoffquerempfindlichkeit notwendige Sauerstoffüberschuß bereits an der inneren Pumpelektrode 22 wirksam.

Die Zuleitung des Meßgases erfolgt bei diesem Ausführungsbeispiel nicht unmittelbar zum sensitiven Bereich der Meßzelle 30, sondern genauso wie der von der Pumpzelle 20 gepumpte Sauerstoff über die poröse Diffusionsschicht 68. Dazu bildet die Abdeckschicht 69 um die poröse Diffusionsschicht 68 herum einen gasdichten Rahmen 70, in welchem zur Zuleitung des Meßgases beispielsweise an zwei gegenüberliegenden Seiten Aussparungen 71 vorgesehen sind. In die Aussparungen 71 reicht die poröse Diffusionsschicht 68 hinein, so daß die Aussparungen 71 jeweils eine Meßgasöffnung 72 bilden. Die Aussparungen 71 sind zweckmäßigerweise weiter als die Meßzelle 30 von der Pumpzelle 20 entfernt. Dadurch liegt die Meßgasöffnung 72 noch weiter als die Meßzelle 30 von der Pumpzelle 20 entfernt und dadurch noch weiter im kälteren Bereich. Damit wird bezweckt, daß das Meßgas weniger katalysiert wird. Eine zu starke Katalysewirkung würde zu einer Vorverbrennung des Meßgases führen, so daß am sensitiven Bereich des Meßelements 30 keine realen Gasbedingungen vorliegen würden.

Es ist auch möglich, den Diffusionskanal 68 nur im Bereich der Meßzelle 30 als poröses Material auszuführen, ansonsten jedoch als Hohlraum auszubilden.

Zum Betreiben der Sensoranordnung wird eine Pumpspannung an die Pumpelektroden 22, 23 angelegt und über eine bekannte Regelungsschaltung, wie sie zum Beispiel in der SAE-Veröffentlichtung 86 04 08 beschrieben ist, an der inneren Pumpelektrode 22 ein konstanter Sauerstoffpartialdruck eingestellt. Der Sauerstoffpartialdruck wird dabei gemäß der Erfindung auf Überschuß gegenüber dem zu messenden Partialdruck der Gaskomponenten eingestellt. Beispielsweise wird der Sauerstoffpartialdruck zwischen 2 und 10 % des Gesamtdrucks des Meßgases gewählt. Der konstante Sauerstoffpartialdruck entspricht auch dem am Meßelement 30 anliegenden Sauerstoffpartialdruck.

Beim Einsatz der Sensoranordnung kann entweder die Pumpzelle 20 und das Meßelement 30 in das Meßgas eingetaucht werden, beziehungsweise beim dritten Ausführungsbeispiel gemäß Figur 6 und 7 soweit, daß die Meßgasöffnung 72 dem Meßgas ausgesetzt ist. Hierbei pumpt die Pumpzelle 20 molekularen Sauerstoff oder Sauerstoff aus sauerstoffhaltigen Verbindungen aus dem Meßgas über die äußere Pumpelektrode 23 ab. Es ist aber genauso üblich, nur das Meßelement 30 mit dem Meßgas in Berührung zu bringen und die Pumpzelle 20 mit dem Diffusionsspalt 66 einem Referenzgas auszusetzen, aus dem der Sauerstoff abgepumpt wird.

Die beschriebene Sensoranordnung ist vorzugsweise in Dickschichttechnik ausgeführt. Die dazu üblich eingesetzte Siebdrucktechnologie ist hinlänglich bekannt.

## Patentansprüche

1. Sensoranordnung zur Bestimmung von Gaskomponenten und/oder Gaskonzentrationen von Gasgemischen, insbesondere von CO, NOₓ und HC in Abgasen von Verbrennungsmotoren, mit einem Schichtsystem mit mindestens einer sauerstoffionenleitenden Festelektrolytkeramik (21, 63) für eine Pumpzelle (20), mit einer Diffusionsstrecke (28, 68) über die von der Pumpzelle (20) gepumpter Sauerstoff zu einem Meßelement (30) geleitet wird, dadurch gekennzeichnet, daß die Pumpzelle (20) und das Meßelement (30) in Richtung der Schichtebene des Schichtsystems beabstandet nebeneinander in unterschiedlichen Temperaturzonen angeordnet sind, daß die Diffusionsstrecke (28, 68) im Schichtsystem integriert ist und sich in Richtung der Schichtebene des Schichtsystems erstreckt und eine Verbindung zwischen der Pumpzelle (20) und der Meßzelle (30) herstellt, und daß die Diffusionsstrecke (28, 68) über eine Diffusionsöffnung (58) verfügt, in der das Meßelement (30) angeordnet ist, derart, daß der gepumpte Sauerstoff über die Diffusionsöffnung (58) dem Meßelement (30) zuführbar ist.

2. Sensoranordnung nach Anspruch 1, dadurch gekennzeichnet, daß die Diffusionsöffnung (58) eine in eine Deckfolie (14) eingelassene Aussparung (15) ist, in der das Meßelement (30) mit seinem sensitiven Bereich angeordnet ist.

3. Sensoranordnung nach Anspruch 1, dadurch gekennzeichnet, daß die Diffusionsöffnung (58) in eine die Diffusionsstrecke (68) gasdicht umschließende Abdeckschicht (69) eingebracht ist, daß sich über der Diffusionsöffnung (58) eine porösen Isolationsschicht (60) befindet, auf der des Meßelement (23) mit seinem sensitiven Bereich angeordnet ist.

4. Sensoranordnung nach Anspruch 2 oder 3, dadurch gekennzeichnet, daß das Meßelement (30) ein Halbleitergassensor ist.

5. Sensoranordnung nach Anspruch 1, dadurch gekennzeichnet, daß die Diffusionsöffnung (58) in eine die Diffusionsstrecke (68) gasdicht umschließende Abdeckschicht (69) eingebracht ist, und daß das Meßelement (30) eine elektrochemische Meßzelle ist, welche mit ihrem sensitiven Bereich in der Diffusionsöffnung (58) positioniert ist.

6. Sensoranordnung nach Anspruch 5, dadurch gekennzeichnet, daß in der Diffusionsöffnung (58) eine Meßelektrode (41) eingesetzt ist, und daß als Referenzelektrode für die Meßzelle die innere Pumpelektrode (22) dient.

7. Sensoranordung nach Anspruch 6, dadurch gekennzeichnet, daß der sensitive Bereich der Meßzelle mit einer gasdichten Abdeckung (43) abgedeckt ist, und daß dem sensitiven Bereich das Meßgas über die Diffusionsschicht (68) zuführbar ist, wobei die Diffusionsschicht (68) über mindestens eine Meßgasäffnung (72) mit dem Meßgas in Verbindung steht.

8. Sensoranordung nach Anspruch 7, dadurch gekennzeichnet, daß sich die Meßgasäffnung (72) weitgehend in einer Temperaturzone der Sensoranordnung befindet, in welcher das Meßgas einer minimalen Vorkatalyse ausgesetzt ist.

9. Sensoranordnung nach Anspruch 7, dadurch gekennzeichnet, daß der Diffusionsstrecke eine von der Pumpzelle (20) zum Meßelement (30) geführte poröse Diffusionsschicht (68) ist.

10. Sensoranordnung nach einem der vorhergehenden Ansprüche, dadurch gekennzeichnet, daß die Diffusionsstrecke ein von der Pumpzelle (20) zum Meßelement (30) geführter Diffusionskanal (28) ist.

11. Sensoranordnung nach einem der vorhergehenden Ansprüche, dadurch gekennzeichnet, daß das Meßelement (30) in bezug auf die Diffusionsstrecke (28, 68) derart angeordnet und die Pumpzelle (20) derart ausgebildet ist, daß am sensitiven Bereich des Meßelements (30) ein Sauerstoffüberschuß anliegt.

12. Sensoranordnung nach einem der vorhergehenden Ansprüche, dadurch gekennzeichnet, daß die Pumpzelle (20) und das Meßelement (30) jeweils über getrennte Heizelemente verfügen, welche mit ihrer Heizleistung an die jeweilige Betriebstemperatur anpaßbar sind.

## Claims

1. Sensor arrangement for the determination of gas components and/or gas concentrations of gas mixtures, in particular of CO, NOₓ and HC in exhaust gases from internal combustion engines, with a layer system having at least one solid electrolyte ceramic (21, 63) which exhibits oxygen ion conduction and is intended for a pump cell (20), having a diffusion path (28, 68) via which oxygen pumped by the pump cell (20) is fed to a measuring element (30), characterized in that the pump cell (20) and the measuring element (30) are arranged at a distance next to one another in the direction of the layer plane of the layer system in different temperature zones, in that the diffusion path (28, 68) is integrated in the layer system and extends in the direction of the layer plane of the layer system and makes a connection between the pump cell (20) and the measuring cell (30), and in that the diffusion path (28, 68) has a diffusion opening (58) in which the measuring element (30) is arranged in such a way that the pumped oxygen can be fed through the diffusion opening (58) to the measuring element (30).

2. Sensor arrangement according to Claim 1, characterized in that the diffusion opening (28) is a gap (15) which is formed in a cover sheet (14) and in which the measuring element (30) is arranged with its sensitive region.

3. Sensor arrangement according to Claim 1, characterized in that the diffusion opening (58) is formed in a covering layer (69) hermetically enclosing the diffusion path (68), and in that, over the diffusion opening (58), there is a porous insulation layer (60) on which the measuring element (23) is arranged with its sensitive region.

4. Sensor arrangement according to Claim 2 or 3, characterized in that the measuring element (30) is a semiconductor gas sensor.

5. Sensor arrangement according to Claim 1, characterized in that the diffusion opening (58) is formed in a covering layer (69) hermetically enclosing the diffusion path (68), and in that the measuring element (30) is an electrochemical measuring cell which is positioned with its sensitive region in the diffusion opening (58).

6. Sensor arrangement according to Claim 5, characterized in that a measuring electrode (41) is placed in the diffusion opening (58), and in that the inner pump electrode (22) serves as a reference electrode for the measuring cell.

7. Sensor arrangement according to Claim 6, characterized in that the sensitive region of the measuring cell is covered with a hermetic covering (43), and in that the gas to be measured can be fed to the sensitive region through the diffusion layer (68), the diffusion layer (68) being in communication with the gas to be measured through at least one opening (72) for the gas to be measured.

8. Sensor arrangement according to Claim 7, characterized in that the opening (72) for the gas to be measured is essentially located in a temperature zone of the sensor arrangement in which the gas to be measured is exposed to minimal precatalysis.

9. Sensor arrangement according to Claim 7, characterized in that the diffusion path is a porous diffusion layer (68) leading from the pump cell (20) to the measuring element (30).

10. Sensor arrangement according to one of the preceding claims, characterized in that the diffusion path is a diffusion channel (28) leading from the pump cell (20) to the measuring element (30).

11. Sensor arrangement according to one of the preceding claims, characterized in that the measuring element (30) is arranged in relation to the diffusion path (28, 68), and the pump cell (20) is designed, in such a way that the sensitive region of the measuring element (30) experiences an oxygen excess.

12. Sensor arrangement according to one of the preceding claims, characterized in that the pump cell (20) and the measuring element (30) each have separate heating elements, which can be matched with the heating power to the respective operating temperature.

## Revendications

1. Détecteur pour déterminer les composants gazeux et/ou les concentrations de gaz dans des mélanges gazeux notamment de CO, NOₓ et HC dans des gaz d'échappement de moteurs à combustion interne, comprenant :
- un système à couche avec au moins une céramique en électrolyte solide (21, 63) conduisant les ions d'oxygène pour une cellule de pompage 20,
- un chemin de diffusion (28, 68) par lequel l'oxygène pompé par la cellule de pompage (20) fourni un élément de mesure (30),
caractérisé en ce que
- la cellule de pompage (20) et l'élément de mesure (30) sont juxtaposés à distance dans la direction du plan des couches du système de couche, dans des zones de température différente,
- le chemin de diffusion (28, 68) est intégré au système de couche et s'étend en direction du plan des couches du système de couche et réalise une liaison entre la cellule de pompage (20) et la cellule de mesure (30) et
- le chemin de diffusion (28, 68) dispose d'une ouverture de diffusion (58) dans laquelle se trouve l'élément (30) pour que l'oxygène pompé puisse être fourni à l'élément de mesure (30) par l'ouverture de diffusion (58).

2. Détecteur selon la revendication 1,
caractérisé en ce que
l'ouverture de diffusion (58) est une découpe (15) réalisée dans une feuille de recouvrement (14), cette découpe recevant l'élément de mesure (30) avec sa zone sensible.

3. Détecteur selon la revendication 1,
caractérisé en ce que
l'ouverture de diffusion (58) est placée dans une couche de recouvrement (69) entourant de manière étanche au gaz le chemin de diffusion (68), et l'ouverture de diffusion (58) est recouvert d'une couche d'isolation poreuse (60) sur laquelle se trouve la zone sensible de l'élément de mesure (23).

4. Détecteur selon la revendication 2 ou 3,
caractérisé en ce que
l'élément de mesure (30) est un détecteur de gaz semi conducteur.

5. Détecteur selon la revendication 1,
caractérisé en ce que
• l'ouverture de diffusion (58) est prévue dans une couche de recouvrement (69) entourant de manière étanche au gaz le chemin de diffusion (68) et
• l'élément de mesure (30) est une cellule de mesure électrochimique positionnée avec sa zone sensible dans l'ouverture de diffusion (58).

6. Détecteur selon la revendication 5,
caractérisé par
une électrode de mesure (41) placée dans l'ouverture de diffusion (58) et l'électrode de référence de la cellule de mesure est l'électrode de pompage intérieur (22).

7. Détecteur selon la revendication 6,
caractérisé en ce que
la zone sensible de la cellule de mesure est recouvert d'un recouvrement étanche au gaz (43) et la zone sensible reçoit le gaz de mesure par une couche de diffusion (68), cette couche (68) étant reliée au gaz de mesure par au moins une ouverture (72) pour le gaz de mesure.

8. Détecteur selon la revendication 7,
caractérisé en ce que
l'ouverture (72) pour le gaz de mesure se trouve principalement dans une zone de température dans laquelle le gaz de mesure est exposé à une pré-catalyse minimale.

9. Détecteur selon la revendication 7,
caractérisé en ce que
le chemin de diffusion est une couche de diffusion poreuse (68) allant de la cellule de pompage (20) à l'élément de mesure (30).

10. Détecteur selon l'une quelconque des revendications précédentes,
caractérisé en ce que
le chemin de diffusion est un canal de diffusion (28) allant de la cellule de pompage (20) à l'élément de mesure (30).

11. Détecteur selon l'une quelconque des revendications précédentes,
caractérisé en ce que
l'élément de mesure (30) est disposé par rapport au chemin de diffusion (28, 68) et la cellule de pompage (20) est réalisée de façon que dans la zone sensible de l'élément de mesure (30) on a un excédent d'oxygène.

12. Détecteur selon l'une quelconque des revendications précédentes,
caractérisé en ce que
la cellule de pompage (20) et l'élément de mesure (30) dispose chaque fois d'un élément de chauffage séparé et ces éléments ont leur puissance de chauffage adaptée à la température de fonctionnement respective.
